(19) Europäisches Patentamt
European Patent Office
Office européen des brevets

(11) Veröffentlichungsnummer : **0 209 684 B2**

# (12) NEUE EUROPÄISCHE PATENTSCHRIFT

(45) Veröffentlichungstag der neuen Patentschrift : **16.12.92 Patentblatt 92/51**

(51) Int. Cl.$^5$ : **C09D 175/12,** C08G 18/67

(21) Anmeldenummer : **86107515.8**

(22) Anmeldetag : **03.06.86**

## (54) Lagerstabile, strahlenhärtbare, NCO-freie wässrige Emulsionen.

Die Akte enthält technische Angaben, die nach dem Eingang der Anmeldung eingereicht wurden und die nicht in dieserPatentschrift enthalten sind.

(30) Priorität : **20.07.85 DE 3526016**

(43) Veröffentlichungstag der Anmeldung : **28.01.87 Patentblatt 87/05**

(45) Bekanntmachung des Hinweises auf die Patenterteilung : **15.03.89 Patentblatt 89/11**

(45) Bekanntmachung des Hinweises auf die Entscheidung über den Einspruch : **16.12.92 Patentblatt 92/51**

(84) Benannte Vertragsstaaten : **AT BE CH DE FR GB IT LI LU NL SE**

(56) Entgegenhaltungen :
**EP-A- 0 026 313**
**DE-A- 2 936 039**
**DE-B- 2 624 442**
**GB-A- 1 076 688**

(73) Patentinhaber : **HÜLS AKTIENGESELLSCHAFT**
**Patentabteilung / PB 15 - Postfach 13 20**
**W-4370 Marl 1 (DE)**

(72) Erfinder : **Flakus, Werner, Dr.**
**Dürerstrasse 23**
**W-4350 Recklinghausen (DE)**

EP 0 209 684 B2

**Beschreibung**

Strahlenhärtbare Harze erzielen ein hohes Leistungsbild lacktechnisch relevanter Prädikate. Die mechanischen Eigenschaften der gehärteten Filme, die Wetter- und Chemikalienbeständigkeit der erzielten Beschichtungen haben heute einen hohen Stand erzielt.

Dergleichen Harze enthalten viskositäts- oder applikationsbedingt geringe oder erhebliche Anteile an monomeren, d.h. an niedermolekularen Bestandteilen, sogenannten Reaktivverdünnern. Beispielsweise seien Vinylacetat, Vinylpyrrolidon, Alkylacrylester, genannt.

Zur Beschichtung saugfähiger oder poröser Untergründe sind als Nachteile solcher Systeme zu nennen: das Eindringvermögen in den Untergrund und eine Armierung saugfähiger Substrate nach Härtung. Bei besonders porösen Substraten werden tief eingedrungene Flüssiganteile nicht oder nicht vollständig bei der Strahlenhärtung polymerisiert und verbleiben in Flüssigform im Untergrund.

Diese niedermolekularen Reaktivverdünner finden zur Handhabung der Viskosität und Regulierung der Schichtdicke in Mengen von 20-70 Gewichtsteilen neben höhermolekularen Harzanteilen Verwendung. Sie sind im allgemeinen gesundheitlich bedenklich oder geruchsbelästigend.

Selbst bei weitgehender Polymerisation aller Bestandteile solcher Harzsysteme - d.h. Einbau der Reaktivverdünner in das System - haftet vielen gehärteten Filmen oder Beschichtungen auch nach der Härtung noch ein Eigengeruch des Ausgangsharzes, im wesentlichen der Reaktivverdünner an, der als Belästigung registriert wird. Es bereitet auch Schwierigkeiten, mit reaktivverdünnerhaltigen Harzen dünne Filme von 5 oder 10 µm nach Härtung zu erzielen, es sei denn, man verwendet anteilsmäßig bei solchen Applikationen noch zusätzlich konventionelle Lösungsmittel, die vor der Strahlenhärtung zur Abdunstung gelangen.

Es liegt also auf der Hand, chemische und technologische Schritte zu ermitteln, um die vorgenannten Nachteile zu reduzieren oder gar zu eliminieren.

Die sukzessive Reduzierung von Reaktivverdünnern durch Wasser, d.h. die anteilsmäßige Verwendung sowohl von Reaktivverdünnern wie auch von Wasser führt zu Wasser-in-Öl-Dispersionen, die nach Härtung leistungsfähige Filme liefern; ein Nachteil ist, daß sie keine stabilen Öl-in-Wasser-Dispersionen bilden und nur begrenzt wasserverdünnbar sind. Als weiteren Nachteil bilden sie nach physikalischer Trocknung zunächst klebrige Filme, auch treten Geruchsbelästigung und Verdampfungsverluste von Reaktivverdünnern auf.

Die unmittelbare Schmelzdispergierung von Acrylharzen in Wasser ohne Hilfe von niedrigviskosen Monomeren bereitet Schwierigkeiten. Die Viskositätslage solcher Harze ist hoch, die Gefahr thermischer Aktivierung der Acrylanteile unter vorzeitiger Polymerisation ist gegeben, da Verarbeitungstemperaturen oberhalb 100°C problematisch sind.

Die technologische Lösung solcher Probleme erfordert also die hilfsweise Verwendung klassischer Lösungsmittel, wie z.B. von Aceton, im Rahmen der chemischen Umsetzung der Ausgangsprodukte miteinander bis zum fertigen Harz. Nach Überführung in die wäßrige Phase erfolgt die destillative Entfernung der Acetonanteile, wobei schließlich eine strahlenreaktive wäßrige Dispersion vorliegen soll, die sowohl frei von Reaktivverdünnern wie auch von sonstigen organischen Lösungsmitteln ist.

Für einen solchen Prozeß, aber auch im Hinblick auf das angestrebte Leistungsbild, bieten sich Urethanacrylionomer-Systeme an. Mit Hilfe von Hydroxyalkylacrylaten können z.B. Polyisocyanate partiell acryliert werden. Durch weitere chemische Reaktionen mit Polyolen wird sowohl der Harzcharakter des Urethanacrylats beeinflußt, als auch das Leistungsbild der gehärteten Filme festgelegt. Durch anteilsmäßigen Einbau von aciden Gruppen (-COOH, $-SO_3H$ etc.) sollen diese Harze mit Hilfe von Alkalihydroxyden (NaOH, KOH) in Wasser dispergiert werden.

Auch durch anteilsmäßigen Einbau von tertiären Aminen (Hydroxyaminen etc.) sollen solche Harze mit Hilfe von anorganischen oder organischen Säuren in Wasser dispergiert werden. Nach destillativer Entfernung des Acetons sollen jeweils lösungsmittelfreie wäßrige Lösungen oder Dispersionen vorliegen. Es zeigte sich aber, daß nach diesem Schema hergestellte Harze entweder noch vor Entfernung des Acetons oder aber wenige Stunden nach der Herstellung der Dispersion koagulierten. Zahlreiche wäßrige Dispersionen bilden nach physikalischer Trocknung feste, trockene, matte Filme, die Dispersionen koagulieren nach kurzer Zeit, da emulgierte wie auch suspendierte Anteile vorliegen.

Ausgehend von aliphatischen Diisocyanaten, wie Hexamethylendiisocyanat, Methylpentamethylendiisocyanat oder Trimethylhexamethylendiisocyanat ist es nicht gelungen, durch stufenweise Acrylierung, Urethanbildung und Emulgierung des resultierenden Harzes stabile Emulsionen herzustellen. Bei Mitverwendung von Triolen kam es zur Gelierung der Harze, bei Ausschluß von Triolen zu Suspensionsanteilen in der Emulsion und nachfolgender Pastenbildung. Die Filme trocknen in Form rissiger, matter Beschichtungen auf, die unbrauchbar sind.

Es ist nun überraschenderweise gelungen, ausgehend von cyclischen Polyisocyanaten nach partieller Umsetzung mit gesättigten und ungesättigten Polyolen, ja sogar mit Triolen, die noch NCO-haltigen acetonischen Präpolymerlösungen mit sowohl wäßrigen Lösungen der Natriumsalze von Monoaminocarbonsäuren als auch unter Mitverwendung von Wasser und/oder aliphatischen Diaminen als Reaktanten unter Harnstoffausbildung in wäßrige Dispersionen zu überführen, die nach destillativer Entfernung des Acetons lagerstabile, wäßrige, anionische Emulsionen vorstellen, bei Raumtemperatur glänzende, klebfreie Filme bilden und nach Strahlenhärtung leistungsfähige Beschichtungen ergeben.

Gegenstand der Erfindung sind daher lagerstabile strahlenhärtbare, NCO-freie, wäßrige Emulsionen auf Basis ionischer Urethanharnstoffacrylate, dadurch gekennzeichnet, daß sie aus zu 10-60 Äquivalent-% NCO mit Hydroxyalkylacrylat, partiell acrylierten cycloaliphatischen Polyisocyanaten, die anschließend zu 20-75 Äquivalent-% NCO mit Polyhydroxylverbindungen, danach zu 5-15 Äquivalent-% NCO mit Na-Salzen von Aminocarbonsäuren und schließlich mit Wasser und/oder der 1-5 Äquivalent-% NCO entsprechenden Menge an aliphatischen Diaminen umgesetzt werden, bestehen.

Weiterer Gegenstand der Erfindung ist ein Verfahren zur Herstellung der Emulsionen nach Anspruch 1, dadurch gekennzeichnet, daß das Umsetzungsprodukt des cycloaliphatischen Polyisocyanats mit den Hydroxyacrylatverbindungen und den Polyolen in üblichen organischen Lösungsmitteln aufgenommen wird und diese lösungsmittelhaltigen Umsetzungsprodukte mit wäßrigen Lösungen von Na-Salzen von Aminocarbonsäuren und anschließend mit Wasser und/oder der 1-5 Äquivalent-% NCO entsprechenden Menge an aliphatischen Diaminen versetzt werden, wobei anschließend das organische Lösungsmittel abdestilliert wird.

Harnstoffsegmente sind vorteilhafte Modifikatoren der Filmendeigenschaften von Polyurethanen hinsichtlich der Reißfestigkeit und Dehnung, aber auch des Abriebs und der Haftung der Filme. Aufgrund der limitierten Verträglichkeit von Harnstoffgruppen mit Urethangruppen in polyfunktionellen Harzsystemen, die durch geeignete Reaktivverdünner, wie Vinylpyrrolidon, Alkylacrylate, verbessert werden, ist es überraschend, daß die erfindungsgemäß hergestellten wäßrigen Acrylurethanharnstoff-Emulsionen frei von jeglichen Reaktivverdünnern, verträgliche und stabile Emulsionen ausbilden.

Die zur Herstellung der erfindungsgemäßen Dispersion geeigneten und beanspruchten cyclischen Diisocyanate sind solche wie Isophorondiisocyanat (IPDI), Diisocyanato-dicyclohexylmethan (HyleneW), Diisocyanato-dimethylcyclohexan (HXDI) und analog substituierte Strukturen:

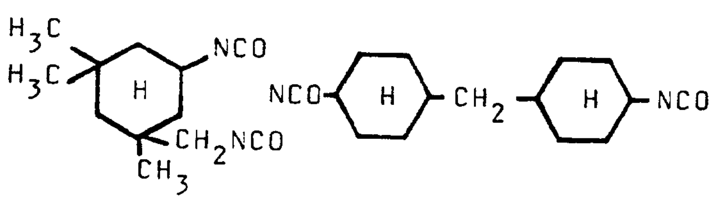

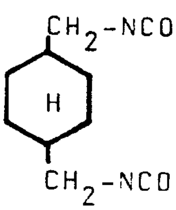

Isophorondiisocyanat    HyleneW    HXDI

Als organisches Lösungsmittel ist insbesondere Aceton geeignet; aber auch Tetrahydrofuran, Methylethylketon usw. kommen u.a. in Frage.

Die zur Acrylierung der erfindungsgemäß herzustellenden Dispersionen geeigneten Verbindungen sind Hydroxyalkylacrylate, vorzugsweise Hydroxyethylacrylat. Die zur Urethanharzausbildung der beanspruchten Dispersion geeigneten Polyole sind Oxyester und Oxyether, insbesondere Polytetramethylendiole mit einem Molgewicht 500-2000, aber auch Triole wie Trimethylolpropan oder Glycerin. Der Einsatz jeweils in den beanspruchten Äquivalentprozenten NCO ist besonders geeignet.

Geeignete Aminocarbonsäuren sind z.B. Aminoessigsäure, Aminobuttersäure, Aminopropionsäure und insbesondere Aminocapronsäure. Geeignete Diamine sind z.B. Ethylendiamin, Hexamethylendiamin, Isophorondiamin und insbesondere Trimethylhexamethylendiamin (TMD).

Der zur Emulgierung der erfindungsgemäßen Harze geeignetste Emulgator ist die NCO-reaktive Aminocapronsäure in Form ihres Natriumsalzes; es wird durch Verseifung von Caprolactam mit NaOH in einfachster Weise gebildet.

Die Emulgierung des Harzes erfolgt mit vorgenannten Emulgatoren in der acetonischen Lösung des noch NCO-haltigen Harzes in wenigen Minuten unter Harnstoffbildung. Nach Zugabe restlicher Wassermengen und Diamin und destillativer Entfernung von Aceton fallen feindisperse Urethanharnstoffacryl-Emulsionen hoher Lagerstabilität an. Die Harnstoffbildung erfolgt über Aminocarbonsäure, Wasser und Diamin.

Die erfindungsgemäß hergestellten Dispersionen sind auch frei von jeglichen sonstigen organischen Lösungsmitteln oder sogenannten Reakivverdünnern, sie können ausgehend von ca. 55% Feststoff mit beliebigen Mengen Wasser verdünnt und appliziert werden. Sie können pigmentiert oder thixotropiert werden, bilden

hochglänzende Filme oder Beschichtungen und können auch mattiert werden.

Die erfindungsgemäß hergestellten Dispersionen sind über Monate dunkellagerstabil. Die strahlengehärteten Beschichtungen sind weitgehend licht- und wetterstabil, können aber auch mit Hilfe klassischer Stabilisatoren stabilisiert werden.

Das Leistungsbild der erfindungsgemäß hergestellten Dispersionen ist dem ähnlich strukturierter, aber reaktivverdünnerhaltigen Polyurethanharnstoffacrylate gleichzusetzen, z.B. hinsichtlich der Film- und Foliendaten der gehärteten Harze, wie in den Beispielen dargelegt wird. Die erfindungsgemäß hergestellten Dispersionen können besonders auf saugfähigen und porösen Substraten, wie Papier, Pappe, Textil, Vlies, Holz, Leder etc., Verwendung finden.

Die erfindungsgemäß hergestellten wäßrigen Dispersionen sind aber gegenüber den vorstehend genannten Systemen mit Reaktivverdünnern geruchsfreie Systeme sowohl in Harzform, nach physikalischer Trocknung und auch nach Strahlenhärtung. Abdampfverluste organischer Anteile sind bei ihrer Applikation nicht ersichtlich, gesundheitliche Beeinträchtigungen bei ihren Handhabungen sind nicht erkennbar.

Die erfindungsgemäß hergestellten Dispersionen übertreffen in ihrem Gesamtleistungsbild den Stand der Technik. Sie können erforderlichenfalls auch auf nicht saugfähigen Untergründen, wie Metall und Kunststoffen, appliziert werden, z.B. auf gebonderten Metallen oder weichmacherhaltigen Kunststoffen, sind gute Haftung gegeben.

Beispiel 1 (Vergleich)

Urethanharnstoffacryldispersion

Basis: HDI-Polyether/2 HEA/TMP/Na-Salz der Aminocapronsäure

In eine Vorlage von 1176 g Hexamethylendiisocyanat (HDI) (7 Mol) und 1,5 g Dibutylzinnlaurat (DBTL) werden unter Rühren innerhalb von ca. 2 h ein Gemisch von 1272,7 g Polytetrahydrofuranether (2 Mol) MG ca. 650, OH-Zahl = 176 mg KOH/g, TERATHANE[R] 650, Fa. DuPont, 352,9 g 2- Hydroxyethylacrylat (3 Mol) OH-Zahl = 476 mg KOH/g und 268 g Trimethylolpropan (2 Mol), bei 25-35°C zugetropft, bei Aufheizung auf 50-60°C nach ca. 3-4 Stunden bis zur Ausbildung eines NCO-haltigen Harzes (1,4-1,6 Gew.-% NCO) gerührt. Nach Zugabe von 3 071 g Aceton ist der Versuch im Kolben geliert.

Beispiel 2 (Vergleich)

Urethanharnstoffacryldispersion

Basis: Methylpentamethylendiisocyanat (MPDI) Polyether/2 HEA/TMP/Na-Salz der Aminocapronsäure

In Analogie zu Beispiel 1 werden 1176 g MPDI (7 Mol) zur Umsetzung gebracht.
Die Gelierung des Produktes erfolgte noch vor Zugabe der acetonischen Verdünnung.

Beispiel 3 (Vergleich)

Urethanharnstoffacryldispersion

Basis: HDI-Polyether/2 HEA/Na-Salz der Aminocapronsäure

In eine Vorlage von 672 g HDI (4 Mol) und 1,1 g Dibutylzinnlaurat werden unter Rühren innerhalb von ca. 1 h ein Gemisch von 1272,7 g Polytetrahydrofuranether (2 Mol), OH-Zahl = 176 mg KOH/g, 235,3 g 2-Hydroxyethylacrylat (2 Mol), OH-Zahl = 476 mg KOH/g bei 25-35°C zugetropft, bei Aufheizung auf 50-60°C ca. 3-4 h bis zur Ausbildung eines NCO-haltigen Harzes (3,9 Gew.-% NCO) gerührt. Nach Zusatz von 2181,1 g Aceton werden in das Reaktionsprodukt bei ca. 40-50°C 619 g Natriumsalz der Aminocapronsäure in Form einer 30%igen wäßrigen Lösung unter Rührung innerhalb von 5 Minuten eingetragen. Anschließend werden in das Reaktionsprodukt 3117 g $H_2O$ eingetragen. Die noch acetonhaltige wäßrige Dispersion wird im Rotationsverdampfer von Aceton befreit. Hierbei kam es zur Phasentrennung mit partieller Sedimentation der Dispersion. Beschichtungsversuche ergaben matte rissige Oberflächenfilme. Die Suspension zementierte nach 24 Stunden zu einer festen Masse.

Beispiel 4 (Vergleich)

Urethanharnstoffacryldispersion

Basis: Methylpentamethylendiisocyanat/Polyether/2 HEA/Na-Salz der Aminocapronsäure

In Analogie zu Beispiel 3 werden 672 g MPDI (2 Mol) zur Umsetzung gebracht. Nach destillativer Entfernung der Acetonanteile resultiert eine feinteilige Dispersion, die matte Filme ausbildet. Nach 24 h Lagerung der Dispersion fällt eine pastenartige Konsistenz an. Nach Verdünnung mit Wasser kommt es zur Phasentrennung von Feststoff und Wasser.

Beispiel 5 (Vergleich)

Urethanharnstoffacryldispersion

Basis: Trimethylhexamethylendiisocyanat (TMDI-)/Polyether/2 HEA/Na-Salz der Aminocapronsäure

In Analogie zu Beispiel 3 werden 840 g TMDI (4 Mol) zur Umsetzung gebracht, bis zur Ausbildung eines NCO-haltigen Harzes (3,6 Gew.% NCO). Nach Zusatz von 2349,1 g Aceton werden in das Reaktionsprodukt bei ca. 40-50°C 616 g Natriumsalz der Aminocapronsäure in Form einer 30%igen wäßrigen Lösung unter Rührung innerhalb von 5 Minuten eingetragen. Anschließend werden in das Reaktionsprodukt 3369,8 g Wasser eingetragen. Die acetonhaltige wäßrige Dispersion wird im Rotationsverdampfer von Aceton befreit. Die Dispersion bildet matte rissige Filme aus. Nach 24 h Lagerung kam es zur Phasentrennung von Feststoff und Wasser.

Beispiel 6

Urethanharnstoffacryldispersion

Basis: Isophorondiisocyanat-Polyether/2 HEA/TMP/Na-Salz der Aminocapronsäure

In Analogie zu Beispiel 1 werden anstelle von Hexamethylendiisocyanat 1554 g Isophorondiisocyanat (7 Mol) + 3,4 g DBTL zur Umsetzung gebracht, bis zur Ausbildung eines NCO-haltigen Harzes (1,4 Gew.-% NCO). Nach Zusatz von 3 451 g Aceton werden in das Reaktionsprodukt bei ca. 40-50°C 469,3 g Natriumsalz der Aminocapronsäure in Form einer 30%igen wäßrigen Lösung unter Rührung innerhalb von 5 Minuten eingetragen. Anschließend werden in das Reaktionsprodukt 5059 g Wasser eingetragen. Die acetonhaltige wäßrige Dispersion wird im Rotationsverdampfer von Aceton befreit.

Der Feststoffgehalt der Dispersion beträgt ca. 40 Gew.-%. Die Viskosität der Dispersion: DIN 4 Becher 17 sek. Die Dunkellagerstabilität bei 60°C ist > 2 Monate. Nach physikalischer Trocknung der Dispersion erhält man folgende Stahlblechdaten:

| | | |
|---|---|---|
| Pendelhärte nach König gem. DIN 53157 | (sek) | 45 |
| Erichsentiefung gem. DIN 53156 | (mm) | >10,0 |

Stahlblech- und Foliendaten nach Härtung der Dispersion bei Zusatz von 2,5 Gew.-% (bezogen auf Feststoff) 1-(4-Isopropylphenyl)-2-hydroxy-2-methylpropan-1-on (DAROCUR$^R$ 1116 der Firma Merck, Darmstadt) mit 200 Watt/inch in 5 Sekunden.

| | | |
|---|---|---|
| Pendelhärte nach König gem. DIN 53157 | (sek) | 119 |
| Erichsentiefung gem. DIN 53156 | (mm) | >10,0 |
| Schichtdicke | (µm) | 130 |
| Bruchspannung gem. DIN 53455 | ($N/mm^2$) | 37,5 ± 4,0 |
| Bruchdehnung | (%) | 8 ± 4 |

Beispiel 7

Urethanharnstoffacryldispersion

Basis: Isophorondiisocyanat-Polyether/2 HEA/TMP/Na-Salz der Aminocapronsäure

In eine Vorlage von 1110 g Isophorondiisocyanat (5 Mol) und 2,8 g Dibutylzinnlaurat (DBTL) werden unter Rührung innerhalb von ca. 2 h ein Gemisch von 1145,4 g Polytetrahydrofuranether (1,8 Mol) MG ca. 650, OH-Zahl = 176 mg KOH/g TERATHANE[R] 650 Firma DuPont, 235,3 g 2-Hydroxyethylacrylat (2 Mol), OH-Zahl = 476 mg KOH/g und 134 g Trimethylolpropan (1 Mol) bei 25-35°C zugetropft, bei Aufheizung auf 50-60°C nach ca. 3-4 h bis zur Ausbildung eines NCO-haltigen Harzes 2,4 Gew.-% NCO gerührt. Nach Zusatz von 2754,8 g Aceton werden in das Reaktionsprodukt bei ca. 40-50°C 398 g Na-Salz der Aminocapronsäure in Form einer 30%igen wäßrigen Lösung unter Rührung innerhalb von 5 Minuten eingetragen. Anschließend werden in das Reaktionsprodukt 3610 g Wasser + 31,6 g Trimethylhexamethylendiamin (0,2 Mol) eingetragen. Die acetonhaltige wäßrige Dispersion wird im Rotationsverdampfer von Aceton befreit.

Der Feststoffgehalt der Dispersion beträgt ca. 42,0 Gew.-%. Die Viskosität der Dispersion: DIN 4 Becher 18 (sek). Die Dunkellagerstabilität bei 60°C ist > 2 Monate.

Nach physikalischer Trocknung der Dispersion erhält man folgende Stahlblechdaten:

| | | |
|---|---|---|
| Pendelhärte nach König gem. DIN 53157 | (sek) | 19 |
| Erichsentiefung gem. DIN 53156 | (mm) | >10,0 |

Stahlblech- und Foliendaten nach Härtung der Dispersion bei Zusatz von 2,5 Gew.-% DAROCUR[R] 1116 mit 200 Watt/inch in 5 Sekunden:

| | | |
|---|---|---|
| Pendelhärte nach König gem. DIN 53157 | (sek) | 45 |
| Erichsentiefung gem. DIN 53156 | (mm) | >10,0 |
| Schichtdicke | (µm) | 145 |
| Bruchspannung gem. DIN 53455 | ($N/mm^2$) | 27,2 ± 4,5 |
| Bruchdehnung | (%) | 105 ± 14 |

Beispiel 8

Urethanharnstoffacryldispersion

Basis: Isophorondiisocyanat-Polyether/2 HEA/TMP/Na-Salz der Aminocapronsäure

In eine Vorlage von 1332 g Isophorondiisocyanat (6 Mol) und 3,6 g Dibutylzinnlaurat (DBTL) werden unter Rühren innerhalb von ca. 2 h ein Gemisch von 1781,8 g Polytetrahydrofuranether (2,8 Mol), OH-Zahl = 176

mg KOH/g TERATHANE[R] 650, Fa. DuPont, 235,3 g 2-Hydroxyethylacrylat (2 Mol), OH-Zahl = 476 mg KOH/g und 134 g Trimethylolpropan (1 Mol) bei 25-35°C zugetropft, bei Aufheizung auf 50-60°C nach ca. 3-4 h bis zur Ausbildung eines NCO-haltigen Harzes (1,89 Gew.-% NCO). Nach Zusatz von 3614 g Aceton werden in das Reaktionsprodukt bei ca. 40-50°C 477,5 g Natriumsalz der Aminocapronsäure in Form einer 30%igen wäßrigen Lösung unter Rührung innerhalb von 5 Minuten eingetragen. Anschließend werden in das Reaktionsprodukt 4749 g Wasser + 31,6 g Trimethylhexamethylendiamin (0,2 Mol) eingetragen. Die acetonhaltige wäßrige Dispersion wird im Rotationsverdampfer von Aceton befreit.

Der Feststoffgehalt der Dispersion beträgt ca. 42,0 Gew.-%. Die Viskosität der Dispersion: DIN 4 Becher 16 (sek). Die Dunkellagerstabilität bei 60°C ist > 2 Monate. Nach physikalischer Trocknung der Dispersion erhält man folgende Stahlblechdaten:

| | | |
|---|---|---|
| Pendelhärte nach König gem. DIN 53157 | (sek) | 13 |
| Erichsentiefung gem. DIN 53156 | (mm) | >10,0 |

Stahlblech- und Foliendaten nach Härtung der Dispersion bei Zusatz von 2,5 Gew.-% DAROCUR[R] 1116 mit 200 Watt/inch in 5 Sekunden:

| | | |
|---|---|---|
| Pendelhärte nach König gem. DIN 53157 | (sek) | 24 |
| Erichsentiefung gem. DIN 53156 | (mm) | >10,0 |
| Schichtdicke | (µm) | 94 |
| Bruchspannung gem. DIN 53455 | ($N/mm^2$) | 19,0 ± 1,3 |
| Bruchdehnung | (%) | 135 ± 7 |

Beispiel 9

Urethanharnstoffacryldispersion

Basis: HyleneW/Polyether/2 HEA/TMP/Na-Salz der Aminocapronsäure

In Analogie zu Beispiel 8 werden 1572 g HyleneW (6 Mol) Dicyclohexylmethandiisocyanat zur Umsetzung gebracht bis zur Ausbildung eines NCO-haltigen Harzes (1,3 Gew.-% NCO). Nach Zusatz von 3854 g Aceton werden in das Reaktionsprodukt bei ca. 40-50°C 486,7 g Natriumsalz der Aminocapronsäure in Form einer 30%igen wäßrigen Lösung unter Rührung innerhalb von 5 Minuten eingetragen. Anschließend werden in das Reaktionsprodukt 5915,7 g $H_2O$ eingetragen. Die acetonhaltige wäßrige Dispersion wird im Rotationsverdampfer von Aceton befreit.

Der Feststoffgehalt der Dispersion beträgt ca. 39 Gew.-%. Die Viskosität der Dispersion: DIN 4 Becher 17 (sek). Die Dunkellagerstabilität bei 60°C ist > 2 Monate.

Nach physikalischer Trocknung der Dispersion erhält man folgende Stahlblechdaten:

| | | |
|---|---|---|
| Pendelhärte nach König gem. DIN 53157 | (sek) | 17 |
| Erichsentiefung gem. DIN 53156 | (mm) | >10,0 |

Stahlblech-und Foliendaten nach Härtung der Dispersionen bei Zusatz von 2,5 Gew.-% DAROCUR[R] 1116 mit 200 Watt/inch in 5 Sekunden:

| | | |
|---|---|---|
| Pendelhärte nach König gem. DIN 53157 | (sek) | 33 |
| Erichsentiefung gem. DIN 53156 | (mm) | >10,0 |
| Schichtdicke | (µm) | 125 |
| Bruchspannung gem. DIN 53455 | ($N/mm^2$) | 21,5 ±4,5 |
| Bruchdehnung | (%) | 110± 14 |

Beispiel 10

Urethanharnstoffacryldispersion

Basis: HXDI/Polyether/2 HEA/TMP/Na-Salz der Aminocapronsäure

In Analogie zu Beispiel 8 werden 1164 g HXDI (6 Mol) Bis-(Isocyanatomethyl)-cyclohexan zur Umsetzung gebracht, bis zur Ausbildung eines NCO-haltigen Harzes (1,3 Gew.-% NCO). Nach Zusatz von 3446 g Aceton werden in das Reaktionsprodukt bei ca. 40-50°C 435,2 g Natriumsalz der Aminocapronsäure in Form einer 30%igen wäßrigen Lösung unter Rührung innerhalb von 5 Minuten eingetragen. Anschließend werden in das Reaktionsprodukt 7395 g $H_2O$ + 15,8 g Trimethylhexamethylendiamin (0,1 Mol) eingetragen. Die acetonhaltige wäßrige Dispersion wird im Rotationsverdampfer von Aceton befreit.

Der Feststoffgehalt der Dispersion beträgt ca. 32 Gew.-%. Die Viskosität der Dispersion: DIN 4 Becher 39 (sek). Die Dunkellagerstabilität bei 60°C ist >2 Monate.

Nach physikalischer Trocknung der Dispersion erhält man folgende Stahlblechdaten:

| | | |
|---|---|---|
| Pendelhärte nach König gem. DIN 53157 | (sek) | 15 |
| Erichsentiefung gem. DIN 53156 | (mm) | >10,0 |

Stahlblech- und Foliendaten nach Härtung der Dispersion bei Zusatz von 2,5 Gew.-% DAROCUR[R] 1116 mit 200 Watt/inch in 5 Sekunden:

| | | |
|---|---|---|
| Pendelhärte nach König gem. DIN 53157 | (sek) | 30 |
| Erichsentiefung gem. DIN 53156 | (mm) | >10,0 |
| Schichtdicke | (µm) | 84 |
| Bruchspannung gem. DIN 53455 | ($N/mm^2$) | 5,6 ±1,0 |
| Bruchdehnung | (%) | 57 ± 12 |

**Patentansprüche**

1. Lagerstabile, strahlenhärtbare, NCO-freie, wäßrige Emulsionen auf Basis wäßriger Urethanharnstoffacrylate,
dadurch gekennzeichnet,
daß sie aus zu
10-60 Äquivalent-% NCO mit Hydroxyacrylaten und aus zu
20-75 Äquivalent-% NCO mit Polyhydroxylverbindungen
umgesetzten cycloaliphatischen Polyisocyanaten bestehen, die danach zu 5-15 Äquivalent-% NCO mit Na-Salz von Aminocapronsäure und schließlich mit Wasser und/oder der 1-5 Äquivalent-% NCO entsprechenden Menge an aliphatischen Diaminen umgesetzt werden.

2. Verfahren zur Herstellung der Emulsionen nach Anspruch 1, dadurch gekennzeichnet, daß das Umsetzungsprodukt des cycloaliphatischen Polyisocyanats mit den Hydroxyacrylatverbindungen und den Polyolen in üblichen organischen Lösungsmitteln aufgenommen wird und diese lösungsmittelhaltigen Umsetzungsprodukte mit wäßrigen Lösungen von Na-Salzen von Aminocarbonsäuren und anschließend mit Wasser und/oder der 1-5 Äquivalent-% NCO entsprechenden Menge an aliphatischen Diaminen versetzt werden, wobei anschließend das organische Lösungsmittel abdestilliert wird.

3. Verfahren nach Anspruch 2, dadurch gekennzeichnet, daß das organische Lösungsmittel Aceton ist.

4. Verfahren nach den Ansprüchen 2 und 3, dadurch gekennzeichnet, daß die Umsetzungsprodukte in den organischen Lösungsmitteln zu 70-30, insbesondere 50% Feststoff bestehen und die wäßrige Phase zu 60-30, insbesondere 50-40%, Feststoff.

## Claims

1. Storage-stable, radiation-curable, NCO-free aqueous emulsions based on urethaneureaacrylate, characterized in that they consist of cycloaliphatic polyisocyanates which are reacted to 10-60 equivalent % NCO with hydroxyacrylates and to 20-75 equivalent % NCO with polyhydroxy compounds and which are thereafter reacted to 5-15 equivalent % NCO with the Na salt of aminocaproic acid and finally with water and/or amounts of aliphatic diamines corresponding to 1-5 equivalent % NCO.

2. A process for the production of emulsions according to Claim 1, characterized in that the reaction product of the cycloaliphatic polyisocyanate with the hydroxyacrylate compounds and the polyols is dissolved in customary organic solvents and the solvent-containing reaction products are mixed with aqueous solutions of Na salts of aminocarboxylic acids and then with water and/or amounts of aliphatic diamines corresponding to the 1-5 equivalent % NCO, and finally the organic solvent is distilled off.

3. A process according to Claim 2, characterized in that the organic solvent is acetone.

4. A process according to Claim 2 and 3, characterized in that the reaction products in the organic solvent consist of 70-30, especially 50%, solids and the aqueous phase of 60-30, especially 50-40%, solids.

## Revendications

1. Emulsions aqueuses dépourvues de NCO durcissables à l'irradiation, stables au stockage, à base d'acrylate/urée/uréthane, caractérisées en ce qu'elles sont constituées à 10-60 % en équivalent de NCO de polyisocyanates cycloaliphatiques déplacés avec des hydroxyacrylates et à 20-75 % en équivalent de NCO avec des composés polyhydroxylés qui ont été transformés ensuite jusqu'à 5-15 % en équivalent de NCO avec le sel de sodium de l'acide aminocaproïque et finalement avec de l'eau et/ou avec la quantité correspondant à 1 à 5 % en équivalent de NCO, en diamines aliphatiques.

2. Procédé pour la préparation des émulsions, selon la revendication 1, caractérisé en ce que l'on reprend dans des solvants organiques usuels le produit de réaction du polyisocyanate cycloaliphatique avec les composés de type hydroxyacrylate et les polyols, et on ajoute à ces produits de réaction, contenant des solvants, des solutions aqueuses de sels de sodium d'acides aminocarboxyliques et ensuite de l'eau et/ou la quantité correspondant à 1-5 % en équivalent NCO de diamines aliphatiques, à la suite de quoi on élimine le solvant organique par distillation.

3. Procédé selon la revendication 2, caractérisé en ce que le solvant organique est l'acétone.

4. Procédé selon les revendications 2 et 3, caractérisé en ce que les produits de réaction, dans les solvants organiques, consistent en 70-30, en particulier 50 % de matières solides, et la phase aqueuse en 60-30, en particulier 50-40 % de matières solides.